# FASCICULE DE BREVET EUROPEEN

(11) **EP 3 077 291 B1**
(45) Date de publication et mention de la délivrance du brevet: **13.02.2019**
(21) Numéro de dépôt: 14825409.7
(22) Date de dépôt: 04.12.2014
(51) Int. Cl.: B64D 41/00, B64F 5/00, B64D 27/00

(54) **SUSPENSION RÉGLABLE D'UN MOTEUR POUR LE POSITIONNER PAR RAPPORT À SON SUPPORT**
EINSTELLBARE MOTORAUFHÄNGUNG ZUR POSITIONIERUNG DES MOTORS RELATIV ZUR HALTERUNG DAVON
ADJUSTABLE ENGINE SUSPENSION FOR POSITIONING THE ENGINE RELATIVE TO THE MOUNT THEREOF

(30) Priorité: 06.12.2013 FR 1362228
(43) Date de publication de la demande: 12.10.2016
(73) Titulaire: Safran Power Units, 31200 Toulouse (FR)
(72) Inventeur: CAZENAVE, Olivier, 31820 Pibrac (FR); LALANNE, Clément, 77550 MOISSY-CRAMAYEL (FR); DIONNE, Luc, Candiac, Québec J5R-6K7 (CA)
(74) Mandataire: Gevers & Orès
(86) Numéro de dépôt international: PCT/FR2014/053171
(87) Numéro de publication internationale: WO 2015/082854

(56) Documents cités:
- EP-A1- 2 602 193
- DE-A1- 2 300 125
- US-A- 2 196 563
- US-A- 3 085 773
- US-A1- 2006 059 891

## Description

### Domaine de l'invention :

La présente invention se rapporte au domaine de la suspension de moteurs, notamment dans un aéronef. Elle vise plus particulièrement le positionnement précis à l'intérieur de l'aéronef du moteur par rapport à des équipements devant coopérer avec ce moteur pour en assurer un fonctionnement correct.

### Etat de la technique :

L'invention concerne notamment un groupe auxiliaire de puissance, appelé ici GAP (aussi appelé APU dans la profession, en référence à la terminologie Anglo-Saxonne : « Auxiliary Power Unit »). Un GAP peut fournir de la puissance aux équipements (alternateurs, pompes, compresseurs de charge, conditionnement d'air) de l'aéronef, directement et/ou indirectement via une boîte de transfert de puissance, notamment pendant les régimes de vol transitoires.

Comme tout turbomoteur (voir par exemple le document DE2300125), un GAP comporte classiquement un ensemble compresseur/chambre de combustion/turbine formant un générateur de gaz. De l'air frais est introduit dans le compresseur puis l'air comprimé, mélangé au carburant, provoque la combustion dans la chambre dédiée. Les gaz chauds ont détendus dans la turbine qui transmet partiellement la puissance mécanique produite au compresseur via un arbre de transmission, la puissance résiduelle étant dirigée via une boîte de transfert de puissance vers les équipements. Dans un autre type d'architecture, la puissance cinétique des gaz d'échappement peut entraîner également une turbine libre qui, à son tour, transmet de la puissance, via un arbre, aux équipements (alternateurs, pompes, compresseur de charge, etc.). Les gaz résiduels sont évacués par une tuyère d'échappement.

Le GAP forme en général un module qui intègre le turbomoteur avec divers accessoires, tels une boîte de transfert de puissance et un système de lubrification, et qui est installé dans un compartiment dédié. Sur les avions civils, par exemple, le groupe auxiliaire de puissance est traditionnellement monté à l'intérieur du cône de queue et fixé en amont sur une cloison du fuselage participant au maintien structural de l'avion.

L'installation du GAP dans son compartiment comporte, en particulier, un conduit ayant pour première fonction de permettre l'échappement des gaz du turbomoteur à l'extérieur de l'aéronef. La présence de ce conduit peut, par ailleurs, être utilisée pour assurer la ventilation et le refroidissement du GAP et de ses accessoires, comme cela est expliqué dans la demande FR2969123.

A cet effet, l'embouchure du conduit d'échappement a une forme évasée propre à accueillir la tuyère de sortie du turbomoteur en ménageant un interstice entre les deux. Cet interstice permet d'aspirer l'air du compartiment par effet Venturi et, ainsi, de créer une circulation d'air secondaire refroidissant le compartiment du GAP et notamment ses équipements et ses parties externes. Il est important de maintenir la forme de cet interstice entre la sortie du turbomoteur et le conduit d'échappement pour assurer le refroidissement. La position du conduit d'échappement est donc généralement ajustée par rapport au GAP.

Généralement, aussi, la tuyère d'échappement du turbomoteur se trouve à l'arrière du GAP et le conduit d'échappement guide les gaz vers un orifice dans la paroi du cône de queue située encore un peu plus en arrière. Cette disposition conduit à devoir positionner le GAP, le conduit et la paroi du cône de queue en des points qui se répartissent le long la direction d'allongement du cône de queue, suivant l'axe du fuselage.

Par ailleurs, le dispositif de suspension du GAP dans le cône de queue, par exemple, comporte en général quatre liens fixant le GAP sur son avant à la cloison du fuselage, deux fixant le GAP sur la structure du cône de queue. Il laisse ainsi l'arrière du GAP, avec la sortie de tuyère, dégagé pour adapter l'échappement dans un espace généralement réduit à ce niveau du compartiment.

Dans cette configuration, la cloison à l'avant du cône de queue fixant une référence, les tolérances de fabrication des divers éléments peuvent entraîner des écarts importants de position relative entre la tuyère du GAP et l'embouchure de l'échappement. Ces écarts peuvent être le fait des dispositifs de maintien du GAP. Cependant, ils peuvent également être dus à la structure du cône de queue, dont un léger gauchissement, par exemple, peut déplacer significativement la position de l'orifice alors que le GAP est correctement aligné par rapport à l'axe du fuselage.

Fabriquer des pièces avec une précision suffisante pour aligner l'ensemble des éléments s'avère complexe et coûteux.

Une solution existante, qui consiste à fixer la partie amont du conduit dans le cône de queue par des plaques dans lesquelles sont agencées des fentes permettant d'adapter la position de leur boulonnage sur la structure, s'avère peu satisfaisante. D'une part elle ne permet pas toujours d'aligner l'embouchure du conduit avec la sortie de la tuyère sans que l'autre extrémité du conduit n'appuie sur les bords de l'orifice dans le cône de queue dans lequel il doit déboucher. Ce genre de situation crée des contraintes sur l'ensemble qui peuvent entraîner une usure prématurée des différents éléments, notamment du joint pare-feu qui est installé à l'orifice. D'autre part ces plaques alourdissent l'ensemble.

Le problème que l'on vient d'exposer peut se retrouver dans d'autres situations. L'objectif de l'invention est d'apporter une solution pour aligner correctement l'ensemble d'un module moteur, en particulier un GAP, d'un module accessoire et d'une partie de la structure du compartiment qui les contient, sans nécessiter une précision excessive de leur fabrication, notamment en ce qui concerne la structure du compartiment.

### Exposé de l'invention :

L'invention concerne un procédé de montage d'un module moteur dans un support comportant une première structure et une deuxième structure déportée par rapport à la première structure, procédé destiné à positionner au moins une partie déterminée du module moteur par rapport à un élément de la deuxième structure au moyen d'une suspension isostatique reliant le module moteur par des premières bielles à ladite première structure et par des deuxièmes bielles à ladite deuxième structure, la longueur desdites premières et deuxièmes bielles étant préalablement définie. Le procédé est procédé dans lequel on ajuste la longueur d'au moins deux desdites premières et deuxièmes bielles par rapport à leur longueur préalablement définie, pour positionner ladite partie déterminée du module moteur par rapport au dit élément de la deuxième structure dans ledit support.

Le fait que la deuxième structure soit déportée indique qu'elle se trouve d'un côté de la première structure par rapport à une direction caractéristique. En particulier les points d'accrochage des bielles sur cette deuxième structure et l'élément par rapport auquel le moteur doit être positionné, se trouvent du même côté en suivant cette direction de déport.

Le module moteur est un ensemble qui peut être manutentionné d'un seul tenant. Il comporte le turbomoteur avec un certain nombre d'équipements directement liés à son fonctionnement, comme la tuyère de sortie des gaz et la bouche d'admission d'air, ou à la transmission de sa puissance, comme la boîte de transfert de puissance pour un GAP.

La suspension du module moteur étant isostatique, elle comprend essentiellement six bielles, chacune montée sur rotule à ses points d'attaches sur la première ou deuxième structure et sur le module moteur. La suspension a été préalablement définie au sens que les positions des points d'attaches et les longueurs des bielles ont été déterminées de manière à contrôler les six degrés de liberté et à positionner le moteur, notamment à la partie déterminée qui doit correspondre avec un élément de la deuxième structure, à partir des dimensions théoriques des structures et du module moteur. Pour un GAP, par exemple, la zone à positionner serait la tuyère de sortie du turbomoteur qui doit s'aligner à un conduit d'échappement.

L'invention répond au fait que la fabrication des divers éléments, que ce soit les structures, le module moteur ou les bielles, admet nécessairement des tolérances par rapport aux dimensions théoriques. Le module moteur installé avec la suspension ainsi fabriquée n'est donc pas nécessairement exactement positionné pour être en correspondance avec l'élément de la deuxième structure.

La variation de longueur d'une bielle, les autres bielles ayant une longueur fixée, fait bouger le module selon un mouvement tel que ses points d'attache aux autres bielles se déplacent sur des sphères centrées sur les points d'attaches aux structures des bielles correspondants. Le module moteur étant proche de la bonne position, des études cinématiques montrent que, notamment pour des installations de groupes auxiliaires de puissance dans des avions, le réglage de deux bielles correspond à la combinaison d'un nombre minimum de liens réglables pour rattraper des écarts de fabrication sur l'installation et positionner au moins certaines parties du module qui doivent respecter un placement par rapport à d'autres équipements. Il est ainsi possible de rattraper un écart de position par rapport à l'embouchure du conduit d'échappement, ce dernier ayant été au préalable correctement centré par rapport à la deuxième structure.

Il est possible en particulier d'utiliser un procédé dans lequel les deux bielles réglables en longueur sont destinées à commander des mouvements transverses à la direction de déport sur au moins une zone du module moteur, notamment la partie déterminée du module qui doit être positionnée par rapport à l'élément de la deuxième structure. Dans le cas du GAP, cela permet de régler le centrage de la tuyère du moteur dans l'embouchure du conduit d'échappement, afin de maintenir un interstice entre les deux.

Avantageusement, dans une variante du procédé, on adapte la longueur de toutes les premières bielles par rapport à leur longueur préalablement définie. En effet, les défauts de positionnement peuvent être, en particulier, dus à un écart d'alignement de la deuxième structure par rapport à la première, alors que le module doit être positionné par rapport à cette deuxième structure. Les tolérances de fabrication peuvent permettre de réaliser préalablement des deuxièmes bielles avec des longueurs correspondant à un placement correct du module moteur par rapport à la deuxième structure. L'invention permet donc d'adapter naturellement la longueur des premières bielles pour corriger l'écart de placement entre les deux structures sans toucher aux deuxièmes bielles. Dans le cas du GAP, cela permet en particulier de positionner correctement à la fois la sortie tuyère par rapport à l'échappement et la bouche d'entrée d'air par rapport aux moyens d'admission d'air.

Avantageusement, dans un tel procédé, l'ajustement des longueurs desdites bielles comporte une étape dans laquelle un mannequin du module moteur, reproduisant avec la même géométrie des points d'attache pour le dispositif de bielles de suspension et une zone représentant la partie déterminée destinée à être positionnée par rapport à la deuxième structure, est fixé au support, les moyens de fixation du mannequin utilisant les premières et deuxièmes bielles dont on maintient la longueur préalablement définie, plus le cas échéant d'autres bielles faisant partie dudit mannequin, afin de commander les 6 degrés de liberté du mannequin par rapport a la deuxième structure

Le mannequin respecte les cotes du module au niveau des points d'attache et des zones, telle que la tuyère de sortie dans le cas d'un groupe auxiliaire de puissance, dont on veut ajuster la position. L'utilisation du mannequin présente plusieurs avantages. Etant plus léger et facilement manipulable, on peut le placer avec précision. Lorsque le mannequin est en place, il suffit de régler la longueur des bielles réglables pour qu'ils s'ajustent dans les points d'attache pour obtenir un ensemble de bielles qui maintiendront le module dans la bonne position. Par ailleurs, un seul mannequin peut être utilisé pour représenter le même GAP installé sur différents avions. De plus, il permet de faire le réglage des bielles en dehors de la chaîne de montage du GAP dans l'avion. En effet il peut être usiné de façon très précise pour les côtes nominales, les modules moteurs montés sur les avions étant fabriqués avec certaines tolérances. Enfin, le mannequin peut aussi être équipé pour déterminer la longueur des bielles surnuméraires éventuellement prévues en cas de redondance contre les risques de rupture.

Avantageusement, également, les moyens de fixation du mannequin au support comportent au moins une liaison entre la zone représentant ladite partie déterminée du module moteur à positionner et l'élément correspondant de la deuxième structure.

En particulier, la ou les liaisons entre la zone à positionner sur le mannequin et l'élément correspondant sur le support permettent de s'assurer que cette zone est naturellement en place quand le mannequin est installé dans le support en réglant les autres liaisons au support. Il est à noter que lorsque ladite liaison entre la zone représentant la partie déterminée du module moteur à positionner et l'élément correspondant de la deuxième structure est coulissante, elle commande deux degrés de liberté, ce qui correspond aux deux bielles réglables minimum. Il est à noter également, que lorsque le procédé utilise quatre premières bielles réglables sur la première structure, le mannequin peut être uniquement lié à la deuxième structure pour l'étape de détermination des longueurs de bielles, mais nécessite pour cela l'ajout de 2 bielles faisant partie du mannequin, reliant ledit mannequin à la deuxième structure, et ce afin de commander les deux derniers degrés de liberté du mannequin et d'assurer son positionnement par rapport a la deuxième structure.

L'invention concerne également un support comprenant une première structure et une deuxième structure déportée par rapport à la première structure, destiné à maintenir un module moteur au moyen d'une suspension isostatique reliant ledit module moteur par des premières bielles à ladite première structure et par des deuxièmes bielles à ladite deuxième structure, ladite suspension isostatique étant agencée de manière à ce qu'au moins une partie déterminée du module moteur soit positionnée par rapport à un élément de la deuxième structure, au moins deux desdites premières et deuxièmes bielles comportant un moyen de réglage de leur longueur.

Un tel support répond à l'objectif pour les mêmes raisons que le procédé qu'il permet de suivre. En particulier, toutes les premières bielles peuvent comporter un moyen de réglage de leur longueur.

Avantageusement, au moins deux desdites premières et deuxièmes bielles sont configurées pour être reliées à un même point d'attache sur le module moteur afin de minimiser poids et nombre d'interfaces. Notamment, Le support peut comporter quatre premières bielles attachées à la première structure et deux deuxièmes bielles attachées à la deuxième structure. Ces six bielles peuvent être réparties en trois groupes, les bielles de chaque groupe étant configurées pour avoir le même point d'attache sur ledit module moteur. Dans ce cas, le premier groupe est constitué de deux desdites premières bielles et d'une desdites deuxièmes bielles, le deuxième groupe est constitué de deux desdites premières bielles, le troisième groupe étant formé d'une desdites deuxièmes bielles. Ce montage, dit 3-2-1 pour un GAP, comprend le nombre minimum de liens pour maintenir le GAP et minimise le poids du dispositif de suspension.

Avantageusement, le moyen de réglage de la longueur d'au moins une bielle comporte un tube et une tige coopérant par un moyen de vissage de la tige dans le tube. Cela permet de régler la bielle simplement en fonction de la longueur constatée lorsque le module est installé à sa place devant le dispositif, pour la monter immédiatement sur les points d'attache. Eventuellement, cela permet de régler la bielle sans la démonter du dispositif.

L'invention concerne aussi un ensemble comprenant un support tel que décrit précédemment et un module moteur maintenu avec ladite suspension isostatique, ladite partie déterminée du module moteur étant placée en correspondance avec ledit élément de la deuxième structure. La deuxième structure et le module moteur peuvent être déportés par rapport à la première structure suivant la même direction de déport, des points d'attache sur le module desdites premières bielles étant situés à proximité de l'extrémité du module tournée vers la première structure.

Avantageusement, dans cet ensemble, au moins deux desdites premières et deuxièmes bielles sont reliées à une même première ferrure, de façon à être reliées à un même point d'attache sur le module moteur, ladite première ferrure comportant une des parties, mâle ou femelle, d'un boulon conique dont la partie complémentaire se trouve sur une deuxième ferrure fixée sur le module moteur, le boulon conique ayant un axe déterminé par la forme de la deuxième ferrure. Dans cet ensemble, l'axe du boulon conique est de préférence sensiblement tangent à une trajectoire suivie par la première ferrure lorsqu'on l'écarte de la deuxième ferrure.

Chaque bielle montée sur rotule permet à l'extrémité libre de se déplacer sur une sphère centrée au point d'attache sur la structure. Lorsque deux bielles ainsi fixés à la structure sont rattachées par leur autre extrémité, cela impose à cette extrémité un mouvement de rotation autour de l'axe passant par les points d'attache des extrémités fixées à la structure. Donc, si le module moteur est en position, la ferrure liée aux deux bielles décrit dans l'espace un cercle qui rejoint la position qu'elle doit occuper lorsqu'elle est fixée sur la ferrure complémentaire, solidaire du module moteur. L'orientation de l'axe du cône de la ferrure, perpendiculaire au plan passant par les points d'attache de chacune des deux bielles sur le support et par leur point d'attache commun sur le module moteur, correspond à la direction de cette rotation et il vient donc s'emboîter naturellement dans le cône correspondant sur la ferrure complémentaire sur le module moteur. La forme conique, par son évasement, permet l'ajustement des deux parties de l'emboîtement au moment de l'introduction de la partie mâle dans la partie femelle. A contrario, par exemple, de simples tiges filetées, même orientées correctement, ne conviendraient pas. En effet, à cause de la rotation, l'extrémité de la tige serait décalée par rapport à l'ouverture au moment de l'introduction.

Comme l'on peut ainsi assembler les ferrures sur le module moteur par rotation autour de l'axe des points d'attache des deux bielles sur la structure, il est possible de commencer par mettre le module moteur, ou son mannequin, en position par une manoeuvre adaptée à son encombrement dans le compartiment, les bielles ayant été écartées pour permettre son passage, puis d'adapter par rotation la ferrure des bielles sur la ferrure complémentaire, fixée au module moteur ou au mannequin. Par exemple, l'utilisation des boulons coniques, peut faciliter les opérations de montage et démontage lors des ajustements du module ou du mannequin dans le procédé décrit précédemment.

L'invention concerne également un ensemble tel que décrit précédemment dans lequel le module moteur comporte un GAP ayant une sortie tuyère, la deuxième structure comportant un moyen d'échappement ayant une embouchure, l'extrémité de sortie de ladite tuyère du module étant positionnée de telle sorte que l'embouchure du moyen d'échappement en entoure une partie sons la toucher. Notamment, la deuxième structure peut être formée par le cône de queue d'un avion et la première structure formée par une cloison du fuselage.

L'invention concerne aussi un mannequin destiné à représenter un module moteur comportant un GAP dans un ensemble selon la revendication 12 reproduisant, avec la même géométrie que sur ledit module moteur, des points d'attache des premières et deuxièmes bielles et une zone représentant la sortie de tuyère du GAP, ledit mannequin étant équipé d'un moyen apte à maintenir la zone représentant la sortie de tuyère dans l'embouchure dudit moyen d'échappement selon deux degrés de liberté. Cette disposition permet de s'assurer que l'interstice entre la tuyère et l'embouchure respecte les cotes pour que l'effet Venturi soit efficace.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente, vu de dessus, le schéma de montage théorique d'un module GAP dans son compartiment.
La figure 2 présente, vu de dessus, le schéma de montage d'un module GAP dans son compartiment selon une première variante de réalisation de l'invention.
La figure 3 présente, vu de dessus, le schéma de montage d'un module GAP dans son compartiment selon une deuxième variante de réalisation de l'invention.
La figure 4 présente, en perspective, le schéma de montage d'un mannequin d'un module GAP selon la variante de réalisation de l'invention correspondant à la figure 2.
La figure 5 présente, en perspective, le schéma de montage d'un mannequin d'un module GAP selon la variante de réalisation de l'invention correspondant à la figure 3.
La figure 6 montre, en coupe longitudinale, une extrémité d'une bielle de longueur réglable.
La figure 7 montre, en coupe longitudinale, l'agencement d'un boulon conique.
La figure 8 présente, vu en perspective, un aspect de l'invention à proximité du point d'attache de plusieurs bielles sur le module GAP.
La figure 9 présente une vue de face du module GAP seul correspondant à l'aspect de l'invention présenté sur la figure 8.

### Description détaillée de l'invention :

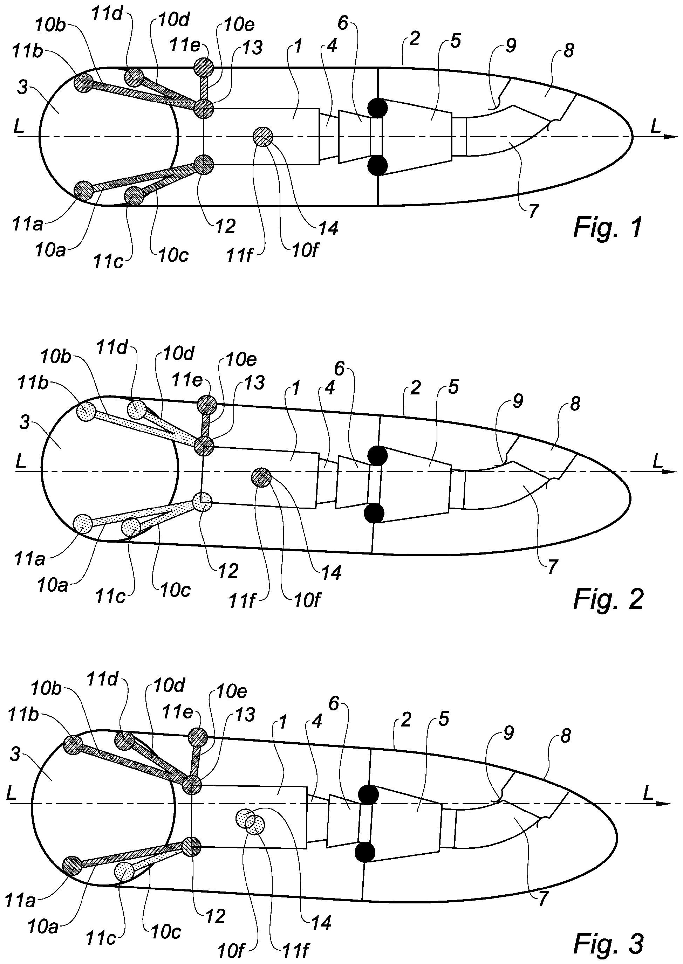

En référence aux figures 1 à 3, l'invention concerne, par exemple, l'installation d'un module moteur GAP 1, dans un compartiment d'aéronef ayant une forme allongée suivant un axe donné LL, délimité latéralement ainsi qu'à une extrémité suivant l'axe par une coque 2 et fermé à l'autre extrémité par une cloison 3 traversée par cet axe. La cloison 3 et la coque 2 forment respectivement une première et une deuxième structure auxquelles peuvent être liés des équipements.

Dans le cas d'un module GAP installé dans un cône de queue d'un avion, par exemple, l'axe LL correspond à l'axe LL du fuselage orienté vers l'arrière, la cloison 3 peut être une cloison structurelle du fuselage, la coque 2 peut comprendre les parois du fuselage après la cloison 3 avec les éléments de structure qui les maintiennent.

Comme, en général, l'axe LL est orienté de l'avant vers l'arrière (de la gauche vers la droite sur la figure 1) et que cela correspond naturellement au sens des écoulements, il est fait référence, par commodité, à l'avant et l'arrière en suivant les sens de l'axe LL indiqué sur la figure 1 dans la suite de la description. Le module moteur GAP 1 et la coque 2 se trouvent tous deux à l'arrière de la cloison 3. La direction suivant l'axe LL vers l'arrière est donc appelée direction de déport dans la suite de la description.

Le module GAP 1, très schématiquement représenté sur la figure 1, forme un module qui intègre différents équipements du turbomoteur et qui, en particulier, comporte sur sa face arrière une tuyère 4 de sortie des gaz du turbomoteur.

Un conduit d'échappement 5 recueille ces gaz d'échappement par une embouchure 6, à l'avant du conduit, qui vient recouvrir partiellement la tuyère 4 de sortie du turbomoteur. Ainsi que c'est indiqué sur la figure, cette embouchure 6 a une forme évasée, plus large que la tuyère 4. Idéalement, la tuyère 4 et l'embouchure 6 sont concentriques et la différence de diamètre ménage un espace annulaire d'épaisseur suffisante pour aspirer l'air du compartiment. Dans la pratique, les deux éléments peuvent ne pas être parfaitement alignés mais ils doivent laisser un passage sur toute la périphérie de la tuyère dont l'épaisseur doit rester comprise entre une valeur minimale et une valeur maximale.

Le conduit 5 rejette ensuite les gaz dans l'air, à l'extérieur du compartiment. Pour cela, son extrémité arrière 7 débouche dans un orifice 8 de la coque 2. Cet orifice 8 peut être équipé d'un dispositif de maintien 9 de l'extrémité arrière 7 du conduit 5. Ce dispositif 9 peut avoir une élasticité lui permettant de conserver le contact avec le conduit au voisinage de son extrémité arrière 7 malgré de petits déplacements par rapport à la position théorique. Il peut ainsi également intégrer une fonction pare-feu en évitant la communication entre l'intérieur du compartiment du GAP et l'extérieur.

La suspension du GAP comporte généralement six liens, 10a à 10f, qui assurent son positionnement selon les six degrés de liberté par rapport au compartiment. Chaque lien relie un point d'attache, 11a à 11f, sur l'une des structures du compartiment à un point d'attache 12 -13 - 14 sur le GAP. Ces liens sont généralement des bielles reliées à leur point d'attache sur la structure par une liaison rotule, ce qui leur permet, individuellement, d'autoriser le point d'attache sur le module GAP à se déplacer sur au moins une portion de sphère centrée sur le point d'attache sur la structure.

Six liens correctement placés, permettent de bloquer les six degrés de liberté du module GAP 1 de manière isostatique et ainsi de le positionner correctement. Un dispositif de suspension peut comporter des liens supplémentaires pour contrer des risques de défaillance d'une bielle. Cependant, ces liens additionnels ne modifient pas l'invention car ils sont installés une fois que les six liens principaux sont correctement placés, en étant ajustés par rapport à la position qu'occupent leurs points d'attache.

Bien que ce ne soit pas obligatoire, les six bielles maintenant le module moteur peuvent être agencées suivant la configuration 3-2-1, comme c'est indiqué sur la figure 1. Dans cette configuration, quatre bielles 10a - 10b - 10c - 10d sont attachées à la cloison structurelle 3 par les points d'attache 11a - 11b - 11c - 11d, et deux bielles 10e - 10f sont attachées à la coque 2 par les points d'attache 11e - 11f. Les bielles 10a et 10c sont attachées à un même point d'attache 12 sur le module GAP 1. Les bielles 10b, 10d et 10e sont attachées à un même point d'attache 13 sur le module GAP. La bielle 10f est relié à un troisième point d'attache 14 sur le module GAP 1.

Les points d'attache 12 et 13 sont avantageusement placés en avant sur le module GAP1, face à la cloison 3 et vers les extrémités latérales par rapport à la direction de déport. Cette configuration donne un bras de levier important pour déplacer des zones du module GAP 1 situées à l'arrière, comme la tuyère de sortie 4, lorsqu'on déplace ces points d'attache en jouant sur les longueurs de bielles. Par ailleurs le point d'attache 14 est situé sur le dessus du module GAP1 vers le milieu. Egalement, son écartement des deux autres points d'attache 12 - 13, ainsi que le triangle non aplati qu'il forme avec eux, permettent de régler facilement la position d'un point du module GAP1 en déplaçant ces trois points.

Les points d'attaches 11b et 11d sur la cloison 3 des bielles 10b et 10d sont situés respectivement au dessus et au dessous du point d'attache 13 sur le module GAP1. Le point d'attache 11 e de la bielle 10 e est situé latéralement par rapport au point d'attache 13 sur le module GAP1. Ces trois bielles permettent donc de contrôler les trois degrés de liberté correspondant aux translations.

De même, les points d'attaches 11a et 11c sur la cloison 3 des bielles 10a et 10c sont situés respectivement au dessus et au dessous du point d'attache 12 sur le module GAP 1 et sont également décalé latéralement vers l'extérieur. Cela permet de commander deux rotations du module GAP 1.

La dernière bielle 10f, fixée à la coque 2 par un point d'attache 11f situé sur la figure 1 à l'aplomb du point d'attache 14 sur le module GAP 1 permet de contrôle la dernière rotation, qui définira en particulier la position verticale de la sortie de tuyère.

D'autres configurations peuvent être utilisées sans changer la nature de l'invention. Il peut y avoir plus de points d'attache sur le module moteur ou les groupements peuvent être différents. Par ailleurs, la répartition entre quatre bielles attachées à la cloison 3 et deux attachées à la coque n'est pas figée. Ainsi, par exemple, la bielle 10e, ou la 10f, ou les deux peuvent être attachée à la cloison 3. Une ou plusieurs des bielles 10a, 10b, 10c, 10d peuvent être reliées a la coque 2

En référence à la figure 1, le système ainsi défini permet de déterminer une longueur nominale des six bielles de telle sorte que, selon les plans de conception, le module GAP1 soit parfaitement aligné selon l'axe LL et la coque 2, ainsi que c'est représenté sur la figure 1. L'avant du conduit d'échappement 5 a été fixée de manière à ce que son embouchure 6 soit centrée par rapport à la coque 2 et entoure la sortie de la tuyère en laissant l'espace nécessaire pour produire l'effet Venturi. Par ailleurs, l'extrémité arrière 7 de l'échappement est correctement centrée dans l'orifice 8 et maintenue sans effort excessif par le moyen de liaison 9.

Cependant, ainsi que cela a déjà été évoqué, l'accumulation de tolérances de fabrication, sur les bielles, sur le module GAP 1, ou encore sur la coque 2, notamment dans ses liens avec le reste de la structure de l'avion, dont la cloison structurelle 3 est solidaire, peut entraîner des défauts d'alignement.

En référence à la figure 2, selon un premier exemple de réalisation de l'invention, on maintient le conduit d'échappement 5 centré par rapport à la coque 2 et on s'autorise à faire varier la longueur des quatre bielles 10a - 10b - 10c - 10d attachées à la cloison structurelle 3, ainsi que c'est illustré sur la figure 2. Pour les deux bielles 10e - 10f, on conserve par contre la longueur nominale préalablement définie sur le modèle. Sur l'exemple, de la figure 2, le défaut d'alignement est essentiellement dû aux écarts de fabrication de la coque 2 ou de sa liaison avec la cloison structurelle 3, ce qui fait que cette coque est désaxée par rapport à la direction LL perpendiculaire à la cloison. Cependant, l'invention peut s'appliquer à d'autre cas, par exemple si les écarts de fabrication du module GAP et/ou des bielles entraînent, au contraire que c'est le module qui est désaxé par rapport à la direction LL. Il peut également se produire que les deux causes soient concomitantes. Dans tous les cas, il faut recentrer le module moteur 1 par rapport à la coque 2 pour que la sortie de tuyère 4 vienne se placer correctement dans l'embouchure 6 du conduit d'échappement 5.

D'une certaine manière cette première réalisation présentée est optimale pour le positionnement du module GAP1 par rapport à des éléments fixés à la coque 2. En effet, si les bielles ont été calculées pour un alignement parfait du module GAP 1 par rapport à la coque 2, les bielles 10e - 10f attachées à la coque ont la bonne longueur et n'ont pas besoin d'être modifiées. Comme c'est illustré sur la figure 2, la modification de longueur des quatre bielles 10a - 10b - 10c - 10d attachées à la cloison structurelle 3, permet de replacer le module GAP 1 nominalement par rapport à la coque 2 et d'aligner la tuyère 4 avec l'embouchure 6 du conduit d'échappement 5.

Si on fait varier la longueur de moins de bielles que celles qui sont attachées à la cloison 3, il peut être intéressant d'inclure des bielles attachées à la coque 2 dans celles dont on fait varier la longueur. Dans un deuxième exemple de réalisation, en référence à la figure 3, seules deux bielles 10f - 10c sont ajustées en longueur, la bielle 10f qui soutient verticalement le module GAP 1 vers son milieu au point d'attache 14 et la bielle 10c qui soutient le point d'attache avant 12 vers l'avant et vers le bas.

Cette suspension permet, même si le module GAP 1 n'est pas parfaitement aligné avec la coque 2, de positionner la sortie de tuyère 4 suffisamment correctement pour préserver l'interstice avec l'embouchure 6 de l'échappement qui permet l'effet Venturi. Le conduit d'échappement 5 étant à sa position nominale dans la coque 2, son extrémité arrière 7 reste par ailleurs correctement positionnée par rapport à l'orifice 8 et il n'y a donc pas d'efforts indésirables exercés sur le moyen de liaison 9.

Il est également possible de faire varier la longueur de deux quelconques bielles parmi les six que comporte la suspension du GAP 1. Le mannequin décrit ci-après nécessitant le blocage de deux degrés de liberté pour établir le jeu nécessaire entre le la tuyère 4 et l'embouchure 6, les deux bielles réglables viennent ensuite s'adapter au mannequin et au GAP 1 afin de garantir une position adéquate pour conserver le jeu désiré. Le réglage de deux bielles ne permet cependant pas de replacer entièrement le module GAP 1 nominalement par rapport à la coque 2, contrairement au réglage des 4 bielles a la cloison structurelle 3, ce qui peut se traduire par un désalignement accentué d'autres interfaces entre le GAP 1 et la coque 2, par exemple des arrivées d'air pour les admissions d'air du turbomoteur.

Par ailleurs le fait que le point d'attache 12 d'au moins une des bielles 10c dont on fait varier la distance soit situé sur le module GAP 1 à une extrémité opposée de la sortie de tuyère 4 que l'on veut positionner suivant la direction de déport LL est intéressant. En effet, les variations de positions des points d'attache avant 12 -13 sur le module sont amplifiées au niveau de la sortie de tuyère 4.

Selon un aspect de l'invention, les six bielles 10a - 10b - 10c - 10d - 10e - 10f du dispositif de suspension isostatique du module GAP 1 sont fabriquées avec la longueur préalablement définie lors de la conception du compartiment et du module moteur. Par contre, les bielles dont on a décidé d'ajuster la longueur, par exemple 10a - 10b - 10c - 10d ou 10c - 10f selon l'un des deux exemples précédents, sont équipées de moyens permettant d'ajuster leur longueur, au moins dans certaines limites, par rapport à la longueur nominale pour laquelle elles ont été fabriquées.

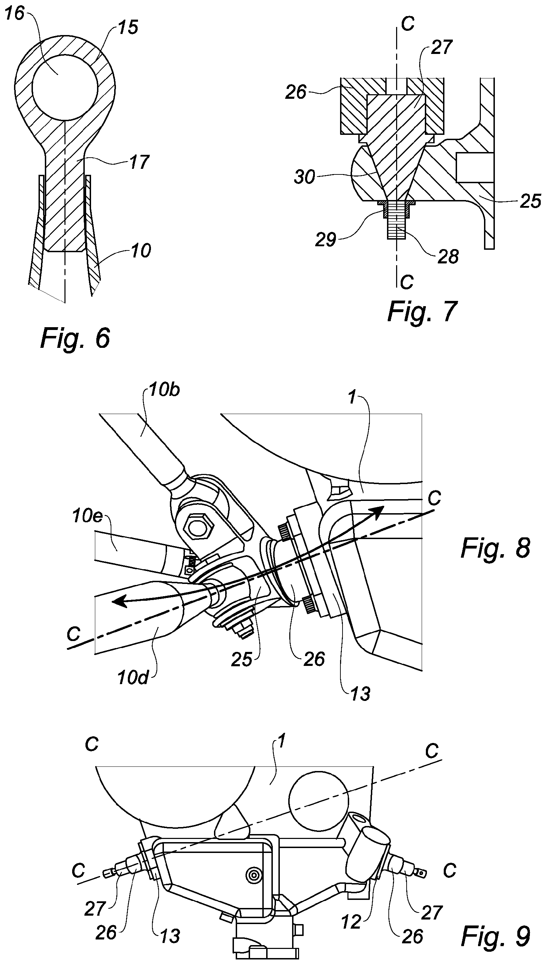

Dans l'exemple de réalisation illustré sur la figure 6, au moins à une extrémité de la bielle 10, la tête 15 destinée à entourer la rotule 16 solidaire de la ferrure de fixation est prolongée par une tige 17 dont l'extrémité est filetée. Le corps de la bielle 10 comporte à l'extrémité correspondante un filetage en creux configuré pour coopérer avec la tige filetée 17 de la tête 15. Par ce moyen, la longueur de la bielle 10 peut être ajustée en vissant ou dévissant la tige filetée 17 de la chape dans le corps de la bielle 10. Lorsque la longueur est ajustée, on peut bloquer le mouvement de la tige 17 par rapport au corps de la bielle 10 de manière réversible, avec un contre écrou par exemple. Il est également possible de coller les deux parties mais il est alors nécessaire de détruire le collage si l'on veut à nouveau modifier la longueur. Un blocage n'est cependant pas nécessaire : lorsque la tête 15 est insérée dans sa chape, non représentée en figure 6, et verrouillée a l'aide d'un boulon les traversant, la tête 15 ne peut alors plus se visser ou dévisser.

Un premier exemple de déroulement du procédé de montage selon l'invention du module moteur GAP 1 dans son compartiment formé par la cloison structurelle 3 et la coque 2 correspond au premier cas présenté en référence à la figure 2, où l'on choisit de faire varier la longueur des quatre bielles 10a - 10b - 10c - 10d attachées à la cloison 3. Il suit les étapes indiquées ci-après.

Dans une étape préliminaire, un dispositif de suspension par bielles est conçu, en fonction des plans de fabrication, pour maintenir le module GAP 1 en position par rapport à la cloison structurelle 3 et la coque 2. Ce positionnement se fait en particulier en tenant compte de la position de l'embouchure 6 du conduit d'échappement 5 correctement centré par rapport à la coque 2. Ce positionnement peut également prendre en compte l'ajustement d'autres parties du module moteur GAP1 par rapport à d'autres équipements attachés à la coque 2, par exemple des arrivées d'air pour les admissions d'air du turbomoteur. Cette conception détermine la position des points d'attaches des bielles sur les structures de l'aéronef et sur le module moteur, ainsi que la longueur des bielles. Cette étape de conception aboutit à définir un dispositif de suspension du module moteur selon l'une des variantes décrites précédemment à propos du dispositif de suspension, comprenant des bielles de longueur variable.

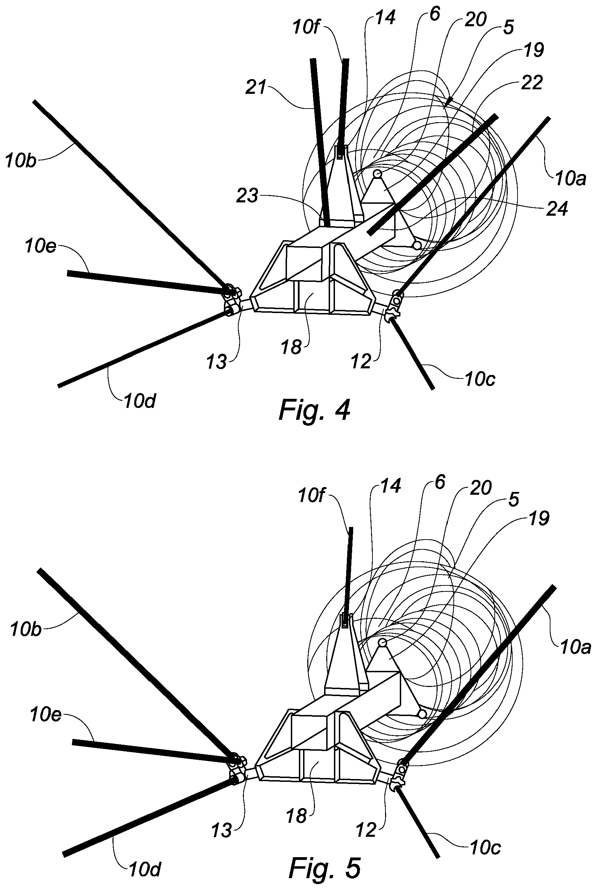

Une première étape intermédiaire comprend la fabrication d'un mannequin 18, représenté sur la figure 4. Ce mannequin 18 est fabriqué sous la forme d'une structure légère, qui prend essentiellement la forme d'une poutre orientée suivant la direction principale du mannequin 18. Le mannequin est configuré afin de représenter de manière fidèle avec leurs positions relatives, d'une part les points d'attaches 12 - 13 - 14 du module moteur GAP 1 avec leurs ferrures pour se raccorder au dispositif de suspension dans le compartiment, d'autre part une zone représentant la sortie de tuyère 4, constituée d'un moyen de centrage 19, destiné à entrer en contact avec l'intérieur de l'embouchure 6 du conduit d'échappement 5, ou dans le conduit d'échappement 5 lui-même .

Ce moyen de centrage 19 dans l'embouchure 6 de l'échappement a la forme d'un triangle sensiblement équilatéral perpendiculaire à la direction principale du mannequin 18, qui correspond sensiblement à la direction de l'axe de la tuyère 4. Chacun des sommets de ce triangle est équipé d'un patin 20 permettant un point de contact unique dans le conduit, et éventuellement monté sur ressort. Ce moyen est configuré pour représenter la tuyère 4 augmentée de l'épaisseur de l'interstice à respecter entre elle et l'embouchure 6 du conduit 5 d'échappement. Il est éventuellement modifié de façon à permettre un centrage à chaud et non a froid de la tuyère 4 dans l'embouchure 6. Il est également configuré pour pouvoir glisser contre les parois intérieures de l'embouchure 6 du conduit 5 d'échappement, tout en permettant des rotations du mannequin 18.

De préférence, ce mannequin 18 est réalisé aux cotes nominales avec une précision significativement supérieure aux tolérances de fabrication des modules moteurs GAP1. Une étude montre que, compte tenu des tolérances de fabrication sur les modules GAP, cela permet de ne fabriquer qu'un seul mannequin 18 pour représenter l'ensemble des modules GAP sortant d'une chaîne de fabrication.

L'étape de détermination des longueurs des bielles 10a - 10b - 10c - 10d pour que le module GAP soit correctement positionné dans le compartiment, comportant la cloison 3, la coque 2 et le conduit 5 d'échappement assemblés, utilise le mannequin 18 fabriqué à l'étape précédente, de la manière représentée sur la figure 4. Cette figure représente, en correspondance avec la figure 2, les quatre bielles 10a -10b - 10c - 10d dans leur position lorsqu'elles sont reliées aux points d'attache sur la cloison 3 et les deux bielles dans leur position lorsqu'elles sont reliées aux points d'attache 10e - 10f sur la coque 2 du compartiment. La figure ne représente pas la cloison 3 ni les parties structurelles de la coque 2 soutenant les points d'attache. Par contre, le conduit 5 d'échappement est représenté avec son embouchure 6.

Lors de cette étape, en référence à la figure 4, le mannequin 18 est installé dans le compartiment à la place du module moteur GAP. Le moyen de centrage 19 est inséré dans l'embouchure 6 de l'échappement, ou dans le conduit d'échappement lui-même, de manière à ce que les patins 20 soient en contact avec la paroi intérieure de l'embouchure ou du conduit. Les deux bielles 10e - 10f attachées à la coque 2, non représentée, sont fixées, avec leur longueur nominale, aux points d'attache 14 et 13 du mannequin correspondant à ceux du module moteur. Pour compléter la suspension du mannequin 18 et terminer du centrage par rapport à la coque 2, deux bielles additionnelles 21 -22 attachées à la coque 2 de manière temporaire, sont fixées en des points 23 - 24 du mannequin, de manière à fixer les deux derniers degrés de liberté. Le mannequin 18 est ainsi parfaitement positionné par rapport a la coque 2 et à l'échappement 6.

Une fois le mannequin 18 mis en place et retenu par ce dispositif de fixation, la longueur des quatre bielles 10a - 10b - 10c - 10d est ajustée de manière à ce qu'elles puissent être fixées à leurs points d'attache sur la cloison 3, non représentés sur la figure 4, et à leurs points d'attache 12 - 13 sur le mannequin 18.

A la fin de cette étape intermédiaire, le dispositif de suspension avec ses bielles 10a - 10b - 10c - 10d - 10e - 10f est en place sur le mannequin 18 avec les longueurs voulues pour les bielles dont on avait décidé de faire varier la longueur.

Il est à noter qu'avec cette variante, le mannequin 18 représente la position du module moteur GAP 1 tel qu'il doit être exactement centré dans la coque 2. Par exemple, les ouvertures d'arrivée d'air liées à la coque seront donc également en face des ouvertures d'admission d'air sur le module sans qu'il soit nécessaire d'adapter des interfaces.

L'étape suivante consiste donc à démonter le mannequin 18 du dispositif de suspension du module, en enlevant les bielles additionnelles 21 -22 qui le liaient à la coque 2.

La dernière étape est donc le montage du module GAP 1 sur le dispositif de suspension réalisé grâce aux étapes précédentes.

Un deuxième exemple de déroulement du procédé de montage selon l'invention du module moteur GAP 1 dans son compartiment formé par la cloison structurelle 3 et la coque 2 correspond au deuxième cas présenté en référence à la figure 3, où l'on choisit de faire varier la longueur de deux quelconques bielles, par exemple 10c attachée à la cloison 3 et 10f attachée à la coque 2. Il suit la même succession d'étapes que le premier exemple.

L'étape préliminaire de conception des divers éléments et du dispositif de suspension est la même. Elle aboutit aux mêmes longueurs préalablement définies des six bielles du dispositif de suspension.

La première étape intermédiaire aboutit à la réalisation du même mannequin 18.

L'étape de détermination des longueurs de bielles diffère en particulier par le mode de fixation du mannequin 18. Lors de cette étape, en référence à la figure 5, le mannequin 18 est installé dans le compartiment à la place du module moteur GAP. Le moyen de centrage 19 est inséré dans l'embouchure 6 de l'échappement de manière à ce que les patins 20 soient en contact avec la paroi intérieure de l'embouchure ou du conduit. Puis les quatre bielles 10a - 10b - 10d - 10e dont on conserve la longueur préalablement définie lors de l'étape préliminaire sont installées sur le mannequin 18. Il s'agit de la bielle 10a fixée à son point d'attache 11a sur la cloison 3, non représenté sur la figure 5 et au point d'attache 12 du mannequin correspondant à celui du module GAP, des deux bielles 10b - 10d reliant les points d'attache correspondants 11b - 11d sur la cloison 3 au point d'attache 13 sur le mannequin 18, et de la bielle 10e fixée à son point d'attache 11e sur la coque 2, non représenté sur la figure 5, et également au point d'attache 13 du mannequin 18.

Une fois ces bielles fixées, contrairement à la variante précédente, il n'y a plus de bielle additionnelle à installer. En effet, en ajoutant les deux degrés de liberté commandés par le moyen de centrage 19 inséré dans l'embouchure 6 de l'échappement, tous les degrés de liberté du mannequin 18 sont bloqués.

Cette étape se termine donc en ajustant la longueur des deux bielles restantes 10c - 10f du dispositif de manière à ce que l'une 10c puisse être fixée à son point d'attache 11c sur la cloison 3, non représenté sur la figure 5, et à son point d'attache 12 sur le mannequin 18, et que l'autre bielle 10f puisse être fixée à son point d'attache 11f sur la coque 2, non représenté sur la figure 5, et à son point d'attache 14 sur le mannequin 18.

Les étapes suivantes du procédé se déroulent ensuite de la même manière que pour le premier exemple.

Le déroulement du procédé a été présenté pour des choix de particuliers de bielles dont on fait varier la longueur mais il peut facilement être adapté à d'autres choix. Par ailleurs l'utilisation d'un mannequin n'est pas obligatoire, la détermination des longueurs des bielles réglables peut être faite par tout moyen, une fois prises en compte les cotes du module moteur et des structures effectivement réalisées et installées.

Dans un mode de réalisation particulier de l'invention, plusieurs bielles peuvent converger vers un même point d'attache sur le module moteur. C'est en particulier le cas sur l'exemple qui a été utilisé pour présenter les différentes variantes d'alignement du GAP en réglant la longueur des bielles où celles-ci forment un montage 3-2-1, évoqué précédemment.

En général la bielle isolée soutient verticalement le GAP par le dessus, tandis que les points d'attache des premier et deuxième groupe de bielles sont situés latéralement vers l'avant du GAP. Cette disposition correspond à un montage/démontage du GAP selon une direction verticale privilégiée vers le bas. Pour faciliter le montage/démontage du GAP, un aspect de l'invention consiste à séparer chaque patte de fixation sur le GAP, notamment celles des premier et deuxième groupes de liens, en deux pattes complémentaires.

La figure 8 illustre cette configuration pour le premier groupe de trois bielles 10b - 10d -10e, au point d'attache 13 sur le GAP 1. Les trois bielles 10b -10d -10e peuvent être attachées à une même première ferrure 25 supportant les liaisons avec les bielles et coopérant avec une deuxième ferrure 26 fixée au module moteur GAP 1 ou au mannequin 18. De la même manière, au point d'attache 12 non représenté sur la figure 8, les deux bielles 10a - 10c du deuxième groupe peuvent être attachées à une même première ferrure 25 supportant les liaisons avec les bielles et coopérant avec une deuxième ferrure 26 fixée au module moteur GAP 1 ou au mannequin 18.

En référence à la figure 7, ces deux ferrures 25 - 26 complémentaires ont une interface mâle/femelle de forme conique, la partie mâle 27 se terminant par un filetage 28 qui permet de la verrouiller avec un écrou 29 lorsqu'elle est positionnée dans la partie femelle 30. Lorsqu'ils sont emboîtés les cônes des parties mâle 27 et femelle 30 ont un axe de symétrie confondu CC.

Généralement la ferrure 25 reliée aux bielles comprend la partie femelle 30 tandis que le cône mâle 27 est porté par la ferrure 26 fixée au module GAP 1 ou au mannequin 18.

Dans une première solution, non représentée, les axes CC des cônes sont verticaux. Le cône mâle 27 sur le groupe vient alors s'insérer naturellement dans la partie femelle 30 de la ferrure correspondante du dispositif de suspension, quand on translate verticalement le module GAP 1 ou le mannequin 18 pour le monter ou le démonter.

Ce système, appelé « boulon conique », permet de monter ou démonter facilement le GAP en ne vissant qu'un seul écrou 29 verrouillant le cône d'interface de chaque groupe de liens. L'interface conique permet de transférer les efforts tout en facilitant le montage.

Dans une variante de réalisation, en référence à la figure 8, deux bielles 10b - 10d sont maintenues solidaires de la ferrure 25 portant la partie femelle 30. Si une troisième bielle 10e arrive également sur cette ferrure 25 elle est détachée. Dans ce cas, la ferrure 25 liée aux deux bielles 10b-10d, lorsqu'elle est désolidarisée de la ferrure 26 liée au module GAP 1, peut décrire un arc de cercle autour de l'axe passant par les points d'attache 11b - 11d sur la cloison 3 des deux bielles 10c - 10d auxquelles la ferrure 25 est liée. Dans ce mode de réalisation l'axe CC du cône mâle 27 de la ferrure 26 fixée au module GAP 1, ou au mannequin 18, est orienté sur ce dernier de telle sorte qu'il soit tangent à l'arc de cercle décrit par la ferrure 25 liée aux bielles 10b - 10d à proximité du point d'attache 13, lorsque le module moteur GAP 1 est installé sur le dispositif de suspension. Par ailleurs, la ferrure 25 liée aux bielles 10b - 10d est elle-même configurée pour que l'axe CC de son cône femelle 30 soit tangent au mouvement de rotation imposé par les deux bielles 10b - 10d auxquelles il est prévu qu'elle reste liée durant les opérations de montage/démontage.

L'invention peut fonctionner également pour un axe CC proche de, mais pas coïncident avec la tangente du mouvement de rotation.

Dans une disposition de suspension en 3-2-1 du module moteur GAP 1, les deux points d'attache avant 12 -13 du module moteur peuvent être configurés de la sorte, ainsi que c'est représenté sur la figure 9. On peut constater en particulier, sur cette figure, que les directions de dégagement latéral des bielles, indiquées par la direction des axes CC des cônes mâles 27 sur les ferrures 26 aux points 12 et 13, ne rencontrent pas d'obstacle lié au module moteur, alors que la direction verticale au dessus du point d'attache 13 est encombrée par un élément du module GAP 1.

L'utilisation d'un montage en 3-2-1 du module GAP1 n'est cependant pas obligatoire. De même, il est toujours possible de réaliser la liaison des bielles de manière plus classique, même lorsque plusieurs bielles convergent vers le même point d'attache.

Les différents aspects et perfectionnements de l'invention ont été décrits en détail pour le cas d'un GAP installé dans un compartiment. Cependant le déposant n'entend pas se limiter à ce cas spécifique. L'homme du métier peut aisément adapter l'invention pour tout moteur suspendu avec une certain déport à une structure et pour lequel il faut adapter le suspension de manière à rattraper des défauts de centrage ou d'alignement dans cette direction de déport.

## Revendications

1. Procédé de montage d'un module moteur (1) dans un support comportant une première structure (3) et une deuxième structure (2) déportée par rapport à la première structure (3), procédé destiné à positionner au moins une partie déterminée (4) du module moteur (1) par rapport à un élément (6) de la deuxième structure (2) au moyen d'une suspension isostatique reliant le module moteur (1) par des premières bielles (10a, 10b, 10c, 10d) à ladite première structure (3) et par des deuxièmes bielles (10e, 10f) à ladite deuxième structure (2), la longueur desdites premières et deuxièmes bielles étant préalablement définie, procédé dans lequel on ajuste la longueur d'au moins deux (10c, 10f) desdites premières et deuxièmes bielles par rapport à leur longueur préalablement définie, pour positionner ladite partie déterminée (4) du module moteur (1) par rapport audit élément (6) de la deuxième structure (2) dans ledit support.

2. Procédé selon la revendication 1 dans lequel on adapte la longueur de toutes les premières bielles (10a, 10b, 10c, 10d) par rapport à leur longueur préalablement définie.

3. Procédé selon l'une des revendications précédentes dans lequel l'ajustement des longueurs desdites bielles (10a, 10b, 10c, 10d) (10c, 10f) comporte une étape dans laquelle un mannequin (18) du module moteur, reproduisant avec la même géométrie des points d'attache (12, 13, 14) pour le dispositif de bielles de suspension et une zone (19) représentant la partie déterminée (4) du module moteur destinée à être positionnée par rapport à la deuxième structure (2), est fixé au support, les moyens de fixation du mannequin (18) utilisant les premières et deuxièmes bielles (10a, 10b, 10c, 10d) (10c, 10f) dont on maintient la longueur préalablement définie.

4. Procédé selon la revendication précédente dans lequel les moyens de fixation du mannequin (18) au support comportent au moins une liaison (20) entre la zone (19) représentant ladite partie déterminée (4) du module moteur à positionner et l'élément (6) correspondant de la deuxième structure (2).

5. Support comprenant une première structure (3), une deuxième structure (2) déportée par rapport à la première structure (3), destiné à maintenir un module moteur (1) au moyen d'une suspension isostatique reliant ledit module moteur (1) par des premières bielles (10a, 10b, 10c, 10d) à ladite première structure (3) et par des deuxièmes bielles (10e, 10f) à ladite deuxième structure (2), ladite suspension isostatique étant agencée de manière à ce qu'au moins une partie déterminée (4) du module moteur (1) soit positionnée par rapport à un élément (6) de la deuxième structure (2), au moins deux (10c, 10f) desdites premières et deuxièmes bielles comportant un moyen de réglage de leur longueur.

6. Support selon la revendication précédente dans lequel toutes les premières bielles (10a, 10b, 10c, 10d) comportent un moyen de réglage de leur longueur.

7. Support selon l'une des revendications 5 ou 6 dans lequel au moins deux (10b, 10d) desdites premières et deuxièmes bielles sont configurées pour être reliées à un même point d'attache (13) sur le module moteur (1).

8. Support selon l'une quelconque des revendications 5 à 7 dans lequel le moyen de réglage de la longueur d'au moins une desdites premières et deuxièmes bielles comporte un tube et une tige coopérant par un moyen de vissage de la tige dans le tube.

9. Ensemble comprenant un support selon l'une quelconque des revendications 5 à 8 et un module moteur (1) maintenu avec ladite suspension isostatique, ladite partie déterminée (4) du module moteur étant placée en correspondance avec ledit élément (6) de la deuxième structure (2).

10. Ensemble selon la revendication précédente dans lequel la deuxième structure (2) et le module moteur (1) sont déportés par rapport à la première structure (3) suivant la même direction de déport, des points d'attache (12, 13) sur le module (1) desdites premières bielles (10a, 10b, 10c, 10d) étant situés à proximité de l'extrémité du module tournée vers la première structure (3).

11. Ensemble selon l'une quelconque des revendications 9 à 10, en combinaison avec la revendication 7 dans lequel lesdites deux bielles (10b, 10d) configurées pour être attachées à un même point d'attache (13) sur le module moteur (1) sont reliées à une même première ferrure (25) comportant une des parties, mâle (27) ou femelle (30), d'un boulon conique dont la partie complémentaire se trouve sur une deuxième ferrure (26) fixée sur le module moteur (1), le boulon conique ayant un axe (CC) déterminé par la forme de la deuxième ferrure (26), ensemble dans lequel l'axe (CC) du boulon conique est sensiblement tangent à une trajectoire suivie par la première ferrure (25) lorsqu'on l'écarte de la deuxième ferrure (26).

12. Ensemble selon l'une quelconque des revendications 9 à 11, dans lequel le module moteur (1) comporte un GAP ayant une sortie tuyère (4), la deuxième structure (2) comportant un moyen d'échappement (5) ayant une embouchure (6), l'extrémité de sortie de ladite tuyère (4) du module moteur (1) étant positionnée de telle sorte que l'embouchure (6) du moyen d'échappement (5) en entoure une partie sans la toucher.

13. Mannequin destiné à représenter un module moteur (1) comportant un GAP dans un ensemble selon la revendication 12 reproduisant, avec la même géométrie que sur ledit module moteur, des points d'attache (12, 13, 14) des premières et deuxièmes bielles et une zone (19) représentant la sortie de tuyère du GAP, ledit mannequin (18) étant équipé d'un moyen (19, 20) apte à maintenir la zone (19) représentant la sortie de tuyère (4) dans l'embouchure (6) dudit moyen d'échappement (5) selon deux degrés de liberté.

## Patentansprüche

1. Verfahren zum Montieren eines Motormoduls (1) in einem Träger, der eine erste Struktur (3) und eine zweite Struktur (2) enthält, die in Bezug auf die erste Struktur (3) versetzt ist, wobei das Verfahren dazu vorgesehen ist, mindestens einen bestimmten Teil (4) des Motormoduls (1) in Bezug auf ein Element (6) der zweiten Struktur (2) mittels einer isostatischen Aufhängung zu positionieren, die das Motormodul (1) über erste Pleuel (10a, 10b, 10c, 10d) mit der ersten Struktur (3) und über zweite Pleuel (10e, 10f) mit der zweiten Struktur (2) verbindet, wobei die Länge der ersten und zweiten Pleuel vorab definiert ist, Verfahren, wobei die Länge von mindestens zwei (10c, 10f) der ersten und zweiten Pleuel in Bezug auf ihre vorab definierte Länge justiert wird, um den bestimmten Teil (4) des Motormoduls (1) in Bezug auf das Element (6) der zweiten Struktur (2) im Träger zu positionieren.

2. Verfahren nach Anspruch 1, wobei die Länge aller ersten Pleuel (10a, 10b, 10c, 10d) in Bezug auf ihre vorab definierte Länge angepasst wird.

3. Verfahren nach einem der vorstehenden Ansprüche, wobei das Justieren der Längen der Pleuel (10a, 10b, 10c, 10d) (10c, 10f) einen Schritt enthält, wobei ein Modell (18) des Motormoduls, das mit der gleichen Geometrie Befestigungspunkte (12, 13, 14) für die Aufhängungspleuelvorrichtung und eine Zone (19) reproduziert, die den bestimmten Teil (4) des Motormoduls darstellt, der dazu vorgesehen ist, in Bezug auf die zweite Struktur (2) positioniert zu werden, am Träger fixiert wird, wobei die Mittel zum Befestigen des Modells (18) die ersten und zweiten Pleuel (10a, 10b, 10c, 10d) (10c, 10f) verwenden, deren vorab definierte Länge beibehalten wird.

4. Verfahren nach dem vorstehenden Anspruch, wobei die Mittel zum Befestigen des Modells (18) am Träger mindestens eine Verbindung (20) zwischen der Zone (19), die den bestimmten Teil (4) des Motormoduls, der positioniert werden soll, darstellt, und dem entsprechenden Element (6) der zweiten Struktur (2) enthalten.

5. Träger, umfassend eine erste Struktur (3), eine zweite Struktur (2), die in Bezug auf die erste Struktur (3) versetzt ist, der dazu vorgesehen ist, ein Motormodul (1) mittels einer isostatischen Aufhängung zu halten, die das Motormodul (1) über erste Pleuel (10a, 10b, 10c, 10d) mit der ersten Struktur (3) und über zweite Pleuel (10e, 10f) mit der zweiten Struktur (2) verbindet, wobei die isostatische Aufhängung so eingerichtet ist, dass mindestens ein bestimmter Teil (4) des Motormoduls (1) in Bezug auf ein Element (6) der zweiten Struktur (2) positioniert wird, wobei mindestens zwei (10c, 10f) der ersten und zweiten Pleuel ein Mittel zum Einstellen ihrer Länge enthalten.

6. Träger nach dem vorstehenden Anspruch, wobei alle ersten Pleuel (10a, 10b, 10c, 10d) ein Mittel zum Einstellen ihrer Länge enthalten.

7. Träger nach einem der Ansprüche 5 oder 6, wobei mindestens zwei (10b, 10d) der ersten und zweiten Pleuel konfiguriert sind, um mit einem gleichen Befestigungspunkt (13) am Motormodul (1) verbunden zu werden.

8. Träger nach einem der Ansprüche 5 bis 7, wobei das Mittel zum Einstellen der Länge von mindestens einem der ersten und zweiten Pleuel ein Rohr und eine Stange enthält, die über ein Mittel zum Verschrauben der Stange in das Rohr zusammenwirken.

9. Anordnung, die einen Träger nach einem der Ansprüche 5 bis 8 und ein Motormodul (1) umfasst, das mit der isostatischen Aufhängung gehalten wird, wobei der bestimmte Teil (4) des Motormoduls mit dem Element (6) der zweiten Struktur (2) entsprechend platziert wird.

10. Anordnung nach dem vorstehenden Anspruch, wobei die zweite Struktur (2) und das Motormodul (1) in Bezug auf die erste Struktur (3) entlang der gleichen Versatzrichtung versetzt sind, wobei Befestigungspunkte (12, 13) der ersten Pleuel (10a, 10b, 10c, 10d) am Modul (1) in Nähe des Endes des Moduls liegen, das der ersten Struktur (3) zugewandt ist.

11. Anordnung nach einem der Ansprüche 9 bis 10 in Kombination mit Anspruch 7, wobei die zwei Pleuel (10b, 10d), die konfiguriert sind, um an einem gleichem Befestigungspunkt (13) am Motormodul (1) befestigt zu werden, mit einem gleichem ersten Beschlag (25) verbunden sind, der einen der Teile, männlich (27) oder weiblich (30), eines Kegelbolzens enthält, dessen komplementärer Teil sich an einem zweiten Beschlag (26) befindet, der am Motormodul (1) fixiert ist, wobei der Kegelbolzen eine Achse (CC) aufweist, die von der Form des zweiten Beschlags (26) bestimmt wird, Anordnung, in der die Achse (CC) des Kegelbolzens im Wesentlichen an einer Bahn anliegt, die vom ersten Beschlag (25) gefolgt wird, wenn dieser vom zweiten Beschlag (26) beabstandet wird.

12. Anordnung nach einem der Ansprüche 9 bis 11, wobei das Motormodul (1) eine APU enthält, die einen Düsenauslass (4) aufweist, wobei die zweite Struktur (2) ein Austrittsmittel (5) enthält, das eine Einmündung (6) aufweist, wobei das Auslassende der Düse (4) des Motormoduls (1) so positioniert ist, dass die Einmündung (6) des Austrittsmittels (5) einen Teil davon umgibt, ohne diese zu berühren.

13. Modell, das dazu vorgesehen ist, ein Motormodul (1), das eine APU enthält, in einer Anordnung nach Anspruch 12 darzustellen, das mit der gleichen Geometrie wie am Motormodul Befestigungspunkte (12, 13, 14) der ersten und zweiten Pleuel und eine Zone (19) reproduziert, die den Düsenauslass der APU darstellt, wobei das Modell (18) mit einem Mittel (19, 20) ausgestattet ist, das dazu in der Lage ist, die Zone (19), die den Düsenauslass (4) darstellt, gemäß zwei Freiheitsgraden in der Einmündung (6) des Austrittsmittels (5) zu halten.

## Claims

1. Method for mounting an engine module (1) in a support comprising a first structure (3) and a second structure (2) that is offset relative to the first structure (3), method intended for positioning at least a specified part (4) of the engine module (1) relative to an element (6) of the second structure (2) by means of an isostatic suspension connecting the engine module (1) to said first structure (3) by means of first connecting rods (10a, 10b, 10c, 10d), and to said second structure (2) by means of second connecting rods (10e, 10f), the length of said first and second connecting rods being defined in advance, method wherein the length of at least two (10c, 10f) of said first and second connecting rods is adjusted relative to the previously defined length thereof, in order to position said specified part (4) of the engine module (1) relative to said element (6) of the second structure (2) in said support.

2. Method according to claim 1, wherein the length of all the first connecting rods (10a, 10b, 10c, 10d) is adapted relative to their previously defined length.

3. Method according to either of the preceding claims, wherein the adjustment of the lengths of said connecting rods (10a, 10b, 10c, 10d) (10c, 10f) comprises a step in which a model (18) of the engine module, reproducing, with the same geometry, attachment points (12, 13, 14) for the suspension connecting rod device and a zone (19) representing the specified part (4) of the engine module intended to be positioned relative to the second structure (2), is fixed to the support, the means for fixing the model (18) using the first and second connecting rods (10a, 10b, 10c, 10d) (10c, 10f), the previously defined length of which is maintained.

4. Method according to the preceding claim, wherein the means for fixing the model (18) to the support comprise at least one connection (20) between the zone (19) representing said specified part (4) of the engine module to be positioned and the corresponding element (6) of the second structure (2).

5. Support comprising a first structure (3), a second structure (2) that is offset relative to the first structure (3), intended to hold an engine module (1) by means of an isostatic suspension connecting said engine module (1) to said first structure (3) by means of first connecting rods (10a, 10b, 10c ,10d) and to said second structure (2) by means of second connecting rods (10e, 10f), said isostatic suspension being arranged so that at least a specified part (4) of the engine module (1) is positioned relative to an element (6) of the second structure (2), at least two (10c, 10f) of said first and second connecting rods comprising a means for adjusting the length thereof.

6. Support according to the preceding claim, wherein all the first connecting rods (10a, 10b, 10c, 10d) comprise a means for adjusting the length thereof.

7. Support according to either claim 5 or claim 6, wherein at least two (10b, 10d) of said first and second connecting rods are configured so as to be connected to the same attachment point (13) on the engine module (1).

8. Support according to any of claims 5 to 7, wherein the means for adjusting the length of at least one of said first and second connecting rods comprises a tube and a rod cooperating by a means for screwing the rod into the tube.

9. Assembly comprising a support according to any of claims 5 to 8, and an engine module (1) held by said isostatic suspension, said specified part (4) of the engine module being placed so as to match said element (6) of the second structure (2).

10. Assembly according to the preceding claim, wherein the second structure (2) and the engine module (1) are offset relative to the first structure (3) in the same offset direction, points of attachment (12, 13) of said first connecting rods (10a, 10b, 10c, 10d) to the module (1) being located in the vicinity of the end of the module facing the first structure (3).

11. Assembly according to either of claims 9 to 10, in combination with claim 7, wherein said two connecting rods (10b, 10d) configured so as to be attached to the same attachment point (13) on the engine module (1) are connected to the same first bracket (25) comprising one of the parts, male (27) or female (30), of a conical bolt, the complementary part of which is located on a second bracket (26) fixed to the engine module (1), the conical bolt having an axis (CC) determined by the shape of the second bracket (26), assembly wherein the axis (CC) of the conical bolt is substantially tangential to a path followed by the first bracket (25) when said bracket is moved away from the second bracket (26).

12. Assembly according to any of claims 9 to 11, wherein the engine module (1) comprises an APU having a nozzle outlet (4), the second structure (2) comprising an exhaust means (5) having a mouth (6), the outlet end of said nozzle (4) of the engine module (1) being positioned so that the mouth (6) of the exhaust means (5) surrounds a portion thereof without touching it.

13. Model intended to represent an engine module (1) comprising an APU in an assembly according to claim 12, reproducing, with the same geometry as on said engine module, points of attachment (12, 13, 14) of the first and second connecting rods, and a zone (19) representing the nozzle outlet of the APU, said model (18) being provided with a means (19, 20) able to hold the zone (19), representing the nozzle outlet (4), in the mouth (6) of said exhaust means (5) according to two degrees of freedom.
